# DEMANDE DE BREVET EUROPEEN

(11) **EP 1 995 709 A2**
(43) Date de publication de la demande: **26.11.2008**
(21) Numéro de dépôt: 07020197.5
(22) Date de dépôt: 16.10.2007
(51) Int. Cl.: G09B 21/00

(54) **Dispositif d'assistance aux personnes présentant des difficultés de communication**

(30) Priorité: 20.11.2006 FR 0610117
(71) Demandeur: Smart IO Systems S.A.R.L., 30035 Nimes Cedex (FR)
(72) Inventeur: Gonzalez, Manuel Jose, 30000 Nîmes (FR); Hugues, Thomas François, 30900 Nîmes (FR)

(57) **Abrégé**

Le dispositif d'assistance (100) comporte, dans un boîtier (170) portable adapté à être utilisé avec une seule main :
- au moins deux écrans (105, 110) adaptés à afficher des images représentatives de messages,
- un moyen de sélection (115, 120) d'au moins un message affiché sur l'un desdits écrans
- un moyen d'émission (125) de signaux sonores et
- un moyen de commande (190) adapté à commander l'émission, par ledit moyen d'émission, de signaux sonores représentatifs de chaque message sélectionné avec ledit moyen de sélection.

Préférentiellement, au moins un écran est tactile. Dans des modes de réalisation, au moins un écran tactile comporte, à la fois, un capteur capacitif et un capteur résistif. Dans des modes de réalisation, au moins un écran tactile comporte un capteur capacitif positionné sous ledit écran. Ledit capteur capacitif comporte une boucle conductrice placée sous l'écran, entourée et/ou superposée à un plan de masse.

## Description

La présente invention concerne un dispositif d'assistance aux personnes présentant des difficultés de communication, par exemple des personnes momentanément ou définitivement muettes.

On connaît des dispositifs d'aide aux personnes présentant des difficultés d'élocution constitués d'un clavier sur lequel sont représentés des phonèmes ou des lettres et d'un circuit de synthèse vocale qui reproduit vocalement les phrases ou termes saisis au clavier. Cependant, ces dispositifs sont d'un usage difficile du fait que la saisie d'un message peut être fastidieux et mobilisent les deux mains de l'utilisateur ou un support. De plus, ces dispositifs présentent une faible autonomie du fait de leur consommation. Enfin, ces dispositifs sont lourds, encombrants et non personnalisables.

La présente invention vise à remédier à ces inconvénients.

A cet effet, selon un premier aspect, la présente invention vise un dispositif d'assistance qui comporte, dans un boîtier portable adapté à être utilisé avec une seule main :
- au moins deux écrans adaptés à afficher des images représentatives de messages,
- un moyen de sélection d'au moins un message affiché sur l'un desdits écrans
- un moyen d'émission de signaux sonores et
- un moyen de commande adapté à commander l'émission, par ledit moyen d'émission, de signaux sonores représentatifs de chaque message sélectionné avec ledit moyen de sélection.

Grâce à ces dispositions, l'utilisateur peut mettre en oeuvre les deux écrans pour sélectionner au moins un messages, le dispositif émettant ensuite un signal sonore permettant à des tiers de comprendre chaque message sélectionné par l'utilisateur.

Selon des caractéristiques particulières, au moins un des dits écrans est un écran tactile qui comporte à la fois un capteur capacitif et un capteur résistif.

La combinaison des deux technologies permet d'augmenter la durée de vie du dispositif.

Selon des caractéristiques particulières, au moins un des dits écrans est un écran tactile qui comporte un capteur capacitif positionné sous ledit écran.

Selon des caractéristiques particulières, ledit capteur capacitif comporte une boucle conductrice placée sous l'écran.

Selon des caractéristiques particulières, ladite boucle est entourée et/ou superposée à un plan de masse.

Selon des caractéristiques particulières, au moins un desdits écrans est doté d'un guide-doigt adapté à guider le doigt de l'utilisateur vers la surface dudit écran.

Selon des caractéristiques particulières, le moyen de sélection et le moyen de commande sont adaptés à commander un défilement d'images sur au moins un des écrans.

Selon des caractéristiques particulières, le moyen de commande est adapté à ce que, au cours d'un défilement, la même image apparaisse successivement sur au moins deux écrans.

Selon des caractéristiques particulières, le moyen de commande est adapté à faire effectuer une rotation à chaque image affichée sur l'un desdits écrans.

Selon des caractéristiques particulières, le moyen de sélection est disposé entre deux des dits écrans.

Selon des caractéristiques particulières, le moyen de sélection comporte un commutateur multidirectionnel, ou « joystick ».

Selon des caractéristiques particulières, le moyen de sélection est, en outre, adapté à commander le défilement d'images, une puissance sonore émise par le moyen d'émission de signaux sonores.

Selon des caractéristiques particulières, le moyen de sélection et le moyen de commande sont adaptés à faire, d'abord, défiler des catégories de message, puis, à partir de la sélection d'une catégorie de message, à faire défiler des messages de la catégorie sélectionnée.

Selon des caractéristiques particulières, le moyen de sélection et le moyen de commande sont adaptés à faire défiler des catégories de message sur l'un des dits écrans et, à partir de la sélection d'une catégorie de message, à faire défiler des messages de la catégorie sélectionnée sur l'autre desdits écrans.

Selon des caractéristiques particulières, chaque image comporte un sous-titre représentant, en clair, le message correspondant à l'image.

Selon des caractéristiques particulières, le moyen de sélection est adapté à sélectionner, d'abord, un premier message, le premier message étant mémorisé par le moyen de commande, puis un second message, le moyen de commande étant adapté à commander l'émission consécutive des premier et deuxième message, par le moyen d'émission de signaux sonores.

Selon des caractéristiques particulières, le moyen de commande est adapté à mémoriser le premier message lors d'un appui long sur le moyen de sélection.

Selon des caractéristiques particulières, au moins un des écrans est un écran à diodes électroluminescentes organiques.

Selon des caractéristiques particulières, le dispositif tel que décrit ci-dessus comporte une caisse de résonance interne dont une paroi est formée par le moyen d'émission de signaux sonores.

Selon des caractéristiques particulières, ladite caisse de résonance comporte des carénages de composants adaptés à éviter, sauf en son extrémité opposée au moyen d'émission de signaux sonores, les surfaces perpendiculaires à un axe de déplacement du moyen d'émission de signaux sonores.

Selon des caractéristiques particulières, le moyen d'émission de signaux sonores est associé à des barres de coupe triangulaire dont un angle fait face au moyen d'émission de signaux sonores.

Selon des caractéristiques particulières, le dispositif tel que succinctement exposé ci-dessus comporte un capteur de bruit ambiant, le moyen de commande étant adapté à commander la puissance sonore émise par le moyen d'émission de signaux sonores en fonction du bruit ambiant capté par le capteur de bruit ambiant.

Selon des caractéristiques particulières, le dispositif tel que succinctement exposé ci-dessus comporte, en coupe longitudinale verticale, une forme en « W ».

Selon des caractéristiques particulières, le dispositif tel que succinctement exposé ci-dessus comporte, en coupe latérale passant par ses points d'appui en position stable, une forme ronde.

Selon des caractéristiques particulières, le dispositif tel que succinctement exposé ci-dessus possède un centre de gravité positionné en dessous du centre de courbure de ladite forme ronde.

Selon des caractéristiques particulières, le dispositif tel que succinctement exposé ci-dessus comporte un méplat au moins au voisinage de ses points d'appui en position stable.

Selon des caractéristiques particulières, le dispositif tel que succinctement exposé ci-dessus comporte un connecteur adapté à le relier à au moins deux contacteurs externes.

Selon des caractéristiques particulières, ledit connecteur est un connecteur normalisé d'écouteurs.

Selon des caractéristiques particulières, le dispositif tel que succinctement exposé ci-dessus comporte un connecteur adapté à le relier à un ordinateur, le moyen de commande étant adapté à recevoir et à mémoriser des images associées à des messages, par l'intermédiaire dudit connecteur.

D'autres avantages, buts et caractéristiques particulières de la présente invention ressortiront de la description qui va suivre, faite, dans un but explicatif et nullement limitatif en regard des dessins annexés dans lesquels :
- la figure 1 représente, schématiquement, en vue de dessus, un premier mode de réalisation particulier du dispositif objet de la présente invention ;
- la figure 2 représente, schématiquement, dans une première vue en section longitudinale horizontale, le dispositif illustré en figure 1 ;
- la figure 3 représente, schématiquement, dans une deuxième vue en section longitudinale horizontale, le dispositif illustré en figure 1 ;
- la figure 4 représente, schématiquement, dans une vue en coupe longitudinale verticale, le dispositif illustré en figure 1 ;
- la figure 5 représente, schématiquement, dans une vue en section latérale verticale, le dispositif illustré en figure 1 ;
- les figures 6 et 7 représentent, sous forme de logigrammes, des étapes mises en oeuvre dans un mode de fonctionnement particulier du dispositif objet de la présente invention et
- la figure 8 représente, schématiquement, en vue de dessus, un deuxième mode de réalisation particulier du dispositif objet de la présente invention.

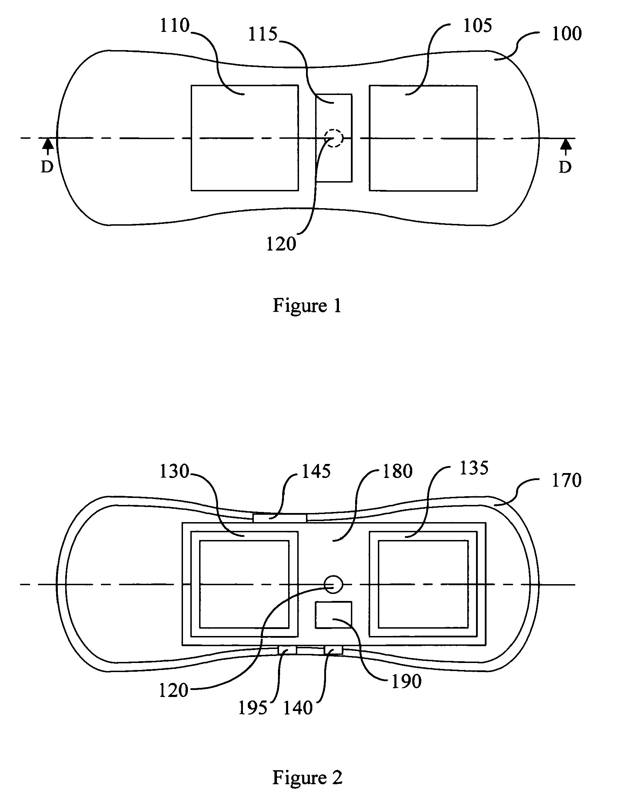

Le dispositif objet de la présente invention, est un outil d'aide à la communication pour certaines personnes handicapées (permanentes ou temporaires). Dans ces modes de réalisation illustrés dans les figures 1 à 5 et 8, il prend la forme générale longiligne d'une télécommande afin de tenir dans la main de l'utilisateur et d'être utilisable avec une seule main. Ce dispositif est portable, facile d'utilisation avec une seule main, simple, léger, robuste, étanche, de grande autonomie et personnalisable.

On observe que les figures ne sont pas à l'échelle, le dispositif pouvant, par exemple posséder des dimensions externes de 14 x 6 x 3,5 centimètres et peser environ 150 grammes. Dans les figures, les fils de liaison des différents composants et circuits ne sont pas représentés.

On observe, en figure 1, un boîtier 100 portant sur sa face supérieure, deux écrans couleurs 105 et 110 et une barre de navigation 115 mécaniquement associée à un commutateur 120 multidirectionnel, c'est-à-dire pouvant provoquer des commutations dans plusieurs directions et, ici, deux sens dans chaque direction horizontale et un sens dans la direction verticale. Ce type de commutateur multidirectionnel est connu sous le nom de « joystick » (marque déposée).

La distance entre les deux écrans 105 et 110 permet un faible déplacement du doigt pour passer de l'un à l'autre et il n'est pas nécessaire de changer la position de la main pour effectuer une sélection sur l'un ou l'autre des écrans.

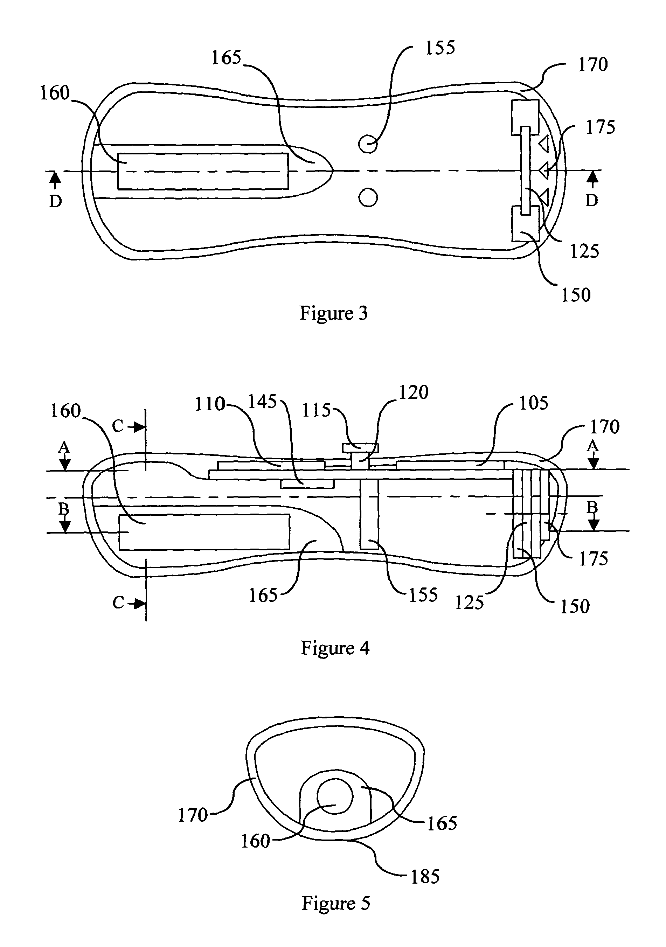

On retrouve ces éléments dans la figure 4, qui est une vue en coupe longitudinale verticale orientée selon les flèches « D » représentées en figures 1 et 3.

Les flèches « A » représentées en figure 4 correspondent au plan de coupe longitudinale horizontale de la section illustrée en figure 2. On observe, en figure 2, que le dispositif comporte une coque 170 et un circuit imprimé 180 portant les écrans 105 et 110, le commutateur 120, un microcontrôleur 190, un capteur de bruit ambiant 195 et un connecteur informatique 145 et un connecteur analogique 140. Un diélectrique (non représenté) protège chaque écran et permet d'optimiser la détection capacitive.

Dans des modes de réalisation, la coque 170 présente, sur au moins une partie de sa surface, un revêtement anti-dérapant.

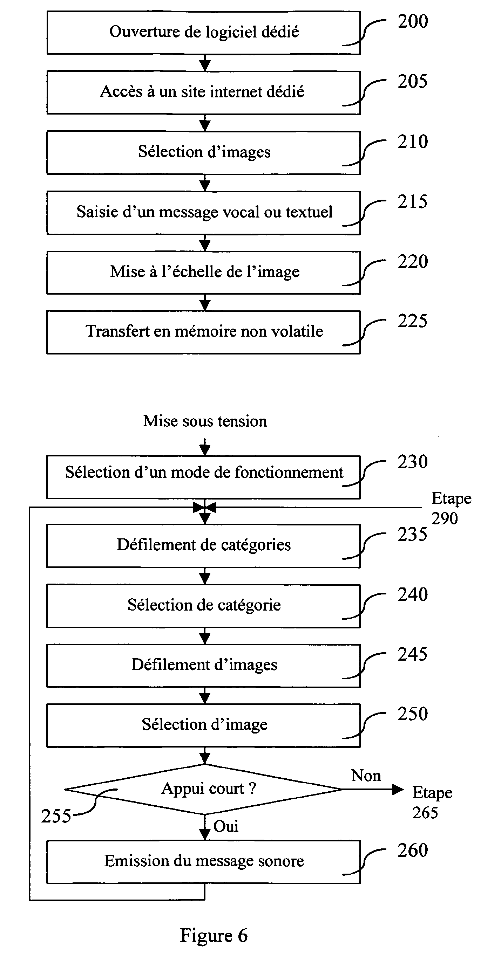

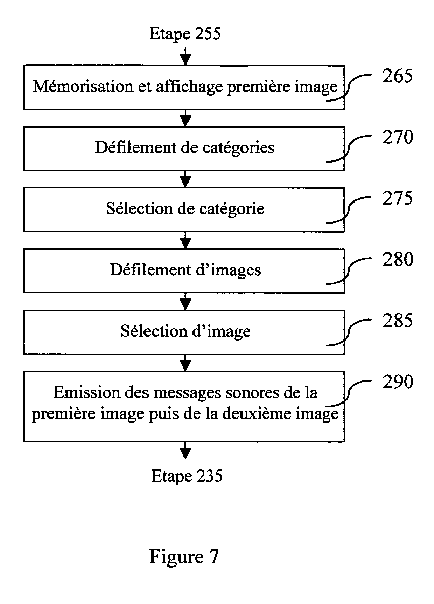

Le microcontrôleur 190 constitue un moyen de commande de chaque composant du dispositif. Il comporte, en particulier, une mémoire non volatile qui conserve :
- un logiciel de fonctionnement du dispositif et qui implémente, en particulier, les étapes représentées en figures 6 et 7,
- des images organisées en catégories, elles-mêmes associées à des images les représentant et des messages sonores associés aux différentes images.

En dessous des écrans 105 et 110 se trouvent, sur le circuit 180, deux boucles 130 et 135, en cuivre qui suivent la périphérie des écrans et sont reliées à deux détecteurs capacitifs (non représentés). Préférentiellement, ces boucles capacitives 130 et 135 sont entourées, sur le circuit 180, d'un plan de masse et sont superposées à un plan de masse se trouvant de l'autre côté du circuit 180. Ces plans de masse ont pour effet de diminuer la portée de chaque boucle capacitive, c'est-à-dire la distance à laquelle elle réagit à la présence d'un doigt.

Grâce aux capteurs capacitifs comportant les boucles 130 et 135, les écrans 105 et 110 sont rendus tactiles, c'est-à-dire que le microcontrôleur 190 peut recevoir de ces capteurs un signal indiquant que l'utilisateur a posé son doigt sur l'un des écrans 105 ou 110.

Préférentiellement, les écrans 105 et 110 sont dépourvus de plan de masse. Les écrans sont, préférentiellement, de type OLED (acronyme de « organic light emitting diodes » pour diodes électroluminescentes organiques).

Autour des écrans 105 et 110 se trouvent des guides-doigts qui sont des rebords volontairement accentués afin de conduire le doigt vers l'écran tactile correspondant. Les écrans étant préférentiellement carrés, le microcontrôleur 190 peut faire pivoter les images de 90, 180 ou 270 degrés par l'intermédiaire du menu de configuration décrit plus loin. Cette fonction est utilisée lorsque le dispositif est posé sur une table ou sur un socle, en particulier lorsqu'il est utilisé en combinaison avec des contacteurs, comme exposé plus loin, avec la description du connecteur 140.

Le connecteur 145 est, par exemple, conforme à la norme USB (acronyme de « universal serial bus » pour bus série universel) et permet la connexion du dispositif à un ordinateur pour lui faire mémoriser des images et des messages associés comme il est expliqué en regard de la figure 6, étapes 200 à 225.

Le connecteur 140 est, par exemple, un connecteur femelle de type « Jack » (marque déposée) audio vidéo à quatre pôles, de 3,5 mm. de diamètre. Ce connecteur a plusieurs fonctions : il permet de connecter des écouteurs, par exemple utilisé par l'utilisateur ou un interlocuteur particulier, ou une entrée audio auxiliaire d'un amplificateur de signaux sonores. Ce connecteur permet aussi de connecter au dispositif deux accessoires de type contacteurs (non représentés), sortes de gros interrupteurs, aussi appelés « bumpers », utilisés dans le domaine médical pour les handicaps moteurs prononcés. En effet, chacun de ces contacteurs utilise une masse commune et l'une des entrées. Ces contacteurs permettent d'utiliser le dispositif lorsqu'il se trouve sur un socle (non représenté), pour faire défiler ou valider les images sur les écrans. De plus, les trois pôles qui complètent le pôle de masse permettent de réaliser un bus parallèle supportant trois entrées binaires, soit huit signaux de signification différentes ou un bus série.

Dans des variantes, chacun des connecteurs exposés ci-dessus est remplacé par une liaison non filaire, par exemple de type Bluetooth ou Wifi (marques déposées).

Le commutateur multidirectionnel 115 permet de naviguer entre des images affichées sur les écrans 105 et/ou 110. Les mouvements verticaux (c'est-à-dire longitudinaux, par rapport à l'axe longitudinal de la télécommande) permettent de faire défiler les images, dans le même sens de mouvement que l'appui effectué sur le commutateur 115. Un appui court vers l'avant ou l'arrière fait défiler une seule image. Un appui long vers l'avant ou l'arrière fait défiler les images continuellement jusqu'à ce que l'appui soit relâché.

Les mouvements latéraux du commutateur 115 permettent d'augmenter ou de diminuer la puissance sonore émise.

Comme exposé plus loin, un appui court sur le commutateur 115 permet de remonter dans une arborescence d'images à afficher. Un appui long sur le commutateur 115 permet d'entrer dans le mode de fonctionnement de configuration ou de paramétrage du dispositif, par exemple permettant de régler :
- le mode de fonctionnement,
- la luminosité des écrans,
- la durée des appuis,
- l'intensité lumineuse des écrans,
- la rotation des images,
- la langue utilisée,
- la présence d'un sous-titre,
- l'extinction du dispositif et
- dans sa version dans laquelle le boîtier est translucide et muni de diodes électroluminescentes internes dont la couleur dépend de la tension qui leur est appliquée, la couleur du dispositif.

Le capteur de bruit ambiant 195, par exemple un microphone, commande aussi la puissance sonore émise pour que, de manière adaptative, le message sonore soit audible et intelligible mais ne risque de gêner le voisinage par un volume sonore excessif en comparaison avec l'ambiance sonore. Ainsi, le commutateur 115 ne commande que la différence, en décibels, entre le bruit ambiant et le volume sonore émis.

Comme on l'observe en figure 3, qui est la section représentée par les flèches « B » en figure 4, le dispositif comporte un haut-parleur 125 en extrémité d'une caisse de résonance délimitée par la coque 170. Dans cette caisse de résonance, les composants, tels que la batterie 160 sont dotés d'un carénage 165 et les éléments de renfort 155 possèdent une forme sans surface plane perpendiculaire à l'axe longitudinal du dispositif, qui est parallèle à l'axe de déplacement du haut-parleur 125.

L'acoustique du dispositif est ainsi étudiée pour offrir un rendement sonore élevé. A cet effet, le haut-parleur 125 est positionné perpendiculairement à l'axe principal du dispositif et emprisonné dans une mâchoire ou rigole 150. Il isole donc la caisse de résonance intérieure de l'extérieur. De plus, la caisse de résonance ne présente pas d'arête vive, mais, au contraire, des angles arrondis, éventuellement par des congés afin d'éliminer toute perpendicularité d'une surface plane à l'axe longitudinal du dispositif. L'onde sonore peut ainsi s'amplifier dans la caisse de résonance. De plus, devant le haut-parleur 125, sont prévus des barres 175 de forme, en coupe, triangulaires, qui guident les ondes sonores émises par le haut-parleur 125 vers les ouies, ou ouvertures (non représentées), afin d'optimiser le rendu du haut-parleur. Chaque élément, par exemple la batterie 160, qui se trouve à l'intérieur de la coque 170 du dispositif, et donc de la caisse de résonance, est caréné par des pièces en matière plastique pour, de nouveau, masquer la partie du composant perpendiculaire à l'axe longitudinal du dispositif.

La forme plane supérieure et la forme ronde inférieure du dispositif permettent aussi une meilleure résonance interne et augmente la puissance sonore dissipée.

On observe que le gain en puissance se trouvant dans les médium (la fréquence de résonance de la caisse de résonance étant centrée sur, environ, 1500 Hertz), les voix synthétisées sont plus intelligibles.

Comme on l'observe en figure 4, en coupe longitudinale verticale, la partie inférieure du dispositif possède une forme en « W » avec deux points d'appui séparés par une arche concave permettant la saisie facile du dispositif.

On observe, en figure 5, qui est une vue en section latérale repérée, en figure 4, par les flèches « C », que la forme extérieure du dispositif est, pour sa partie inférieure, globalement ronde et possède un méplat 185 au voisinage du point d'appui du dispositif lorsqu'il est en position stable et, préférentiellement, sur toute la longueur du dispositif, dans son plan de symétrie horizontale.

Du fait que la batterie 160 est positionnée à proximité de ce point d'appui, le centre de gravité se trouve en dessous du centre de courbure de la forme ronde du dispositif.

La partie inférieure du dispositif, partie qui se trouve dans le creux de la main, présente ainsi, sur une coupe du dispositif perpendiculaire à son axe longitudinal, une forme ronde. Cela procure un effet « culbuto » au dispositif : lorsque le dispositif est posé sur le flanc, la position de son centre de gravité, proche de la partie inférieure, la forme ronde et le méplat provoque sa stabilisation rapide dans une configuration où la surface supérieure, qui porte les écrans, se trouve horizontale. De plus, le méplat permet de positionner les doigts de l'utilisateur lorsqu'il a le dispositif dans la main.

On observe qu'une dragonne non représentée permet de lier le dispositif au poignet de l'utilisateur afin d'éviter que le dispositif ne tombe et afin de libérer, par moments, la main de l'utilisateur qui actionne le dispositif.

Dans des modes de réalisation, le dispositif comporte, de plus, un capteur capacitif placé dans sa partie inférieure et adapté à détecter la prise en main du dispositif. Ce capteur capacitif permet de faire sortie le dispositif du mode veille dès que l'utilisateur le saisit.

Grâce aux dispositions techniques exposées ci-dessus, les inventeurs ont constaté une autonomie de deux jours en utilisation continue, la recharge de la batterie 160 se faisant grâce au connecteur 145.

On va maintenant décrire, en regard des figures 6 et 7, comment le dispositif est personnalisé par son utilisateur et comment il fonctionne.

Au cours d'une étape 200, l'utilisateur lance un logiciel dédié. Au cours d'une étape 205 optionnelle, l'utilisateur accède à un site internet dédié, selon des techniques connues en soi. Ce site comporte, notamment, une bibliothèque d'images et d'icônes.

Au cours d'une étape 210, l'utilisateur effectue une sélection d'images, soit sur le site dédié, soit sur un autre site, soit sur son ordinateur ou un appareil photo, par exemple L'utilisateur classe ces images dans des catégories d'images. Par exemple ces catégories sont « actions », « hôpital », « fruits », « légumes, « viandes, « poissons », ...

Au cours d'une étape 215, l'utilisateur saisit un texte qu'il souhaite associer à chaque image sélectionnée. Pour ce faire, il peut utiliser le clavier de l'ordinateur, un microphone intégré à l'ordinateur ou un texte associé, sur le site internet dédié, à l'image considérée.

Eventuellement, au cours de l'étape 215, le site internet dédié fournit automatiquement une traduction du texte saisi, dans une langue choisie par l'utilisateur.

Au cours d'une étape 220, l'ordinateur effectue une mise à l'échelle de chaque image, c'est-à-dire qu'il la remplace par une image possédant une définition égale ou inférieure à celle des écrans 105 et 110. Au cours de cette même étape, si la synthèse vocale n'est pas effectuée par le microcontrôleur 190, l'ordinateur ou le serveur du site effectue la synthèse vocale du texte saisi et associe les signaux sonores produits à l'image correspondante, en mémoire de l'ordinateur. On observe que, pour cette synthèse vocale, l'utilisateur peut choisir une voix d'homme, de femme ou d'enfant et une langue.

Préférentiellement, au cours de l'étape 220, l'ordinateur fournit au dispositif le message associé à chaque image en vue de son sous-titrage.

Au cours d'une étape 225, les images sélectionnées et organisées en catégories et les textes ou signaux sonores associés sont téléchargés dans la mémoire non volatile du dispositif 100, par exemple par l'intermédiaire du connecteur 145.

Ainsi, l'ensemble de l'arborescence, c'est-à-dire l'ensemble des catégories et l'ensemble des images dans les différentes catégories, est personnalisable grâce à un ordinateur. L'utilisateur choisit, avec son ordinateur, des images auxquels il associe des phrases tapées au clavier de l'ordinateur ou des sons enregistrés à l'aide d'un microphone. L'utilisateur peut aussi choisir, sur Internet, des images et/ou des messages associés. Les images sont automatiquement mise au format des écrans du dispositif par le logiciel de l'ordinateur.

Lorsque, ultérieurement, l'utilisateur met le dispositif 100 sous tension ou le fait sortir du mode « veille » part l'intermédiaire du commutateur multidirectionnel 120 ou d'un capteur capacitif, dès la fin de son initialisation, au cours d'une étape 230, l'utilisateur choisit un mode de fonctionnement.

Dans un premier mode de fonctionnement, l'utilisateur peut naviguer dans l'arborescence des catégories et images de la catégorie choisie. Les écrans servent à afficher deux images successives dans une liste d'images correspondant à une catégorie. Au cours du défilement, chaque image apparaît successivement sur les deux écrans. Ainsi, si les images « pomme » et « poire » sont affichées respectivement sur les écrans avant 105 et arrière 110, après un appui en avant sur le joystick 115, l'image « poire » apparaît sur l'écran avant 105.

Dans un deuxième mode de navigation, sur l'écran avant 105 défilent les images qui représentent les catégories et sur l'écran arrière 110, les images de la catégorie sélectionnée avec l'écran avant 105. Une pression sur l'un des écrans permet de valider la catégorie (par exemple « fruits ») ou l'image dans la catégorie (par exemple « pomme »).

Au cours d'une étape 235, l'utilisateur fait défiler les images qui représentent des catégories en mettant en oeuvre le joystick 115. Un appui court ne fait défiler qu'une seule image. Un appui long fait défiler continuellement les images, avec un rythme permettant leur reconnaissance.

Si le paramétrage de fonctionnement prévoit un sous-titrage des images, le dispositif incruste dans chaque image le message associé à l'image. Si le message ne peut être affiché en entier sur une ligne tout en restant lisible, le dispositif le fait défiler latéralement en bas de l'image.

Le commutateur multidirectionnel permet ainsi de naviguer entre les images des catégories. Les mouvements verticaux (c'est-à-dire longitudinaux, par rapport à l'axe longitudinal de la télécommande) permettent de faire défiler les images, dans le même sens de mouvement que l'appui effectué sur le commutateur 115. Un appui court vers l'avant ou l'arrière fait défiler une seule image. Un appui long vers l'avant ou l'arrière fait défiler les images continuellement jusqu'à ce que l'appui soit relâché.

On observe que les mouvements latéraux du commutateur 115 permettent d'augmenter ou de diminuer la puissance sonore émise.

Au cours d'une étape 240, l'utilisateur sélectionne une catégorie. Il lui suffit, pour cela, de toucher du doigt l'image de la catégorie sélectionnée. Puis les messages disponibles dans la catégorie sont affichés et peuvent défiler sur les écrans, au cours d'une étape 245, comme exposé ci-dessus.

On observe que, pour retourner au choix des catégories, il suffit de presser sur le commutateur 115 par un appui court. Un appui long sur le commutateur 115 permet d'entrer dans le mode de fonctionnement de paramétrage du dispositif, par exemple pour régler la luminosité des écrans, la durée des appuis, ...

On observe aussi que l'utilisation, dans le premier mode de fonctionnement, des deux écrans pour que les images soient affichées deux fois, c'est-à-dire successivement sur les deux écrans, au cours d'un défilement, améliore la vitesse de reconnaissance des images. Des raisons de psychologie cognitive, de mémoire immédiate et de persistance rétinienne sont ainsi prises en compte par le biais de la mise en oeuvre de deux écrans. De plus, l'utilisation de deux petits écrans, plutôt qu'un grand est favorable, en terme d'autonomie (deux petits écrans consomment moins qu'un grand écran), de robustesse (une panne se limite à un seul écran et en laisse un disponible) et de lutte contre les effets de certaines maladies réduisant la capacité de dissociation des images.

Puis au cours d'une étape 250, l'utilisateur effectue la sélection d'une image dans une catégorie, en appuyant son doigt sur l'écran qui représente cette image.

Au cours d'une étape 255, on détermine si l'appui de l'utilisateur sur l'écran est court, par exemple inférieur à deux secondes, ou long.

Si la durée d'appui est courte, au cours d'une étape 260 le microcontrôleur 190 commande l'émission, par le haut-parleur 125, du signal sonore associé à l'image sélectionnée, éventuellement en effectuant sa synthèse vocale à partir d'un texte mémorisé. Ainsi, si on appuie sur l'image d'une pomme, le dispositif 100 prononce « je voudrais manger une pomme ».

Puis on retourne à l'étape 235.

Si la durée d'appui est longue, au cours d'une étape 265 (figure 7), le microcontrôleur 190 effectue la mémorisation du texte associé à l'image sélectionnée, qui sera, dans la suite de la description, appelée « première » et l'affichage sur l'un des écrans, jusqu'à la fin de l'étape 290, de la première image sélectionnée.

Puis, au cours des étapes 270 à 285, on reproduit les étapes 235 à 250, respectivement. A la fin de l'étape 285, c'est-à-dire lorsqu'une deuxième image a été sélectionnée, au cours d'une étape 290, le microcontrôleur 190 provoque l'émission consécutive des signaux sonores associés à la première image sélectionnée puis à la deuxième image sélectionnée. Puis on retourne à l'étape 235.

La mise en veille du dispositif, non représentée, est déclenchée lorsque aucune interaction de l'utilisateur n'a été détectée pendant une durée prédéterminée, par exemple deux minutes.

Ainsi, dans chacun des modes de navigation, on exploite la durée des appuis pour déclencher des actions différentes. Avec un appui court, le message associé à la première image est diffusé. Avec un appui long, ce message est gardé en mémoire et s'affiche, de façon permanente sur l'écran avant 105, jusqu'à ce qu'une image soit sélectionnée grâce à l'écran arrière, par sélection de catégorie puis de message dans la catégorie sélectionnée. Le message correspondant à l'image avant, la première image sélectionnée, est, alors, d'abord prononcé, suivi par le message correspondant à l'image arrière, la deuxième image sélectionnée. Par exemple, on choisit d'abord, dans la catégorie « action », le message « je veux » puis, dans la catégorie « fruit », « une pomme ».

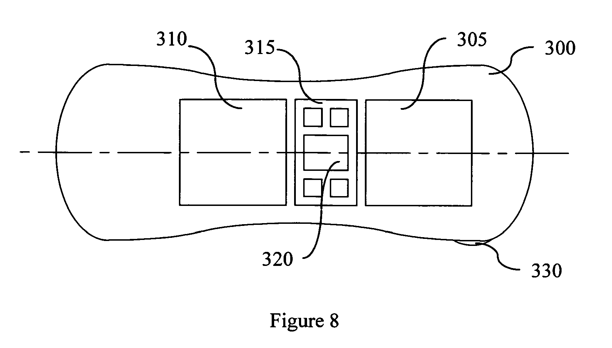

Dans le deuxième mode de réalisation, illustré en figure 8, un boîtier 300 porte, sur sa face supérieure, deux écrans couleurs 305 et 310 et un clavier de navigation 315 comportant une touche de validation 320 centrale. Il comporte aussi, sur une face latérale, un interrupteur/modulateur 330 à molette qui permet de mettre en mode veille ou de réveiller le dispositif et sert au réglage du volume.

Les écrans couleurs 305 et 310 comportent, sur leur surface supérieure, des dalles résistives qui, par rapport au premier mode de réalisation, remplacent les capteurs capacitifs placés en dessous des écrans. On peut ainsi détecter l'appui d'un doigt ou d'un objet grâce aux variations de la résistance électrique. La métallisation des couches de la dalle résistive permet d'utiliser aussi la technologie capacitive. La combinaison des deux technologies permet d'augmenter la durée de vie du dispositif.

Dans le clavier de navigation 315, par rapport au premier mode de réalisation, le joystick central est remplacé par cinq touches capacitives. L'ergonomie est ainsi améliorée pour certains utilisateurs et ce remplacement permet d'avoir une étanchéité de la coque améliorée. Avec le clavier 315, un appui simultané sur la touche centrale 320 et sur les deux écrans 305 et 310 permet de désactiver l'alimentation du dispositif. L'affectation des touches est configurable, comme exposé ci-dessus. Par exemple, les deux touches latérales les plus proches de l'écran 305 portent des symboles de flèches et l'appui sur ces touches provoque le défilement des images affichées sur les écrans et les touches latérales les plus proches de l'écran 310 portent d'autres symboles et l'appui sur ces touches représente un accord ou un désaccord. La touche centrale 320 peut aussi permettre à l'utilisateur de revenir à son menu personnel. Préférentiellement, les touches du clavier 315 sont retro-éclairées avec des diodes électroluminescentes de différentes couleurs, le choix des couleurs utilisées étant laisser à l'utilisateur lors de la configuration.

En ce qui concerne le fonctionnement de chaque dalle tactile résistive à quatre fils, celle-ci possède une structure à deux éléments superposés :
- un substrat de verre portant une couche résistive uniforme en ITO (oxyde d'indium et d'étain) et
- un film de polyester superposé au substrat et portant, du côté du substrat, une couche résisitive ITO et, du côté opposé, un enduit dur et durable.

Le substrat et le film sont séparés par de petits points transparents imprimés et d'entretoise d'isolation.

Quand le film de polyester est touché par l'utilisateur, il se déplace vers la substrat jusqu'à former un contact électrique entre les deux couches d'ITO. La résistance formée entre les deux couches conductrices prend alors une valeur minimale détectée par un circuit électronique de type connu. On observe que la position d'appui peut aussi être déterminée avec cette dalle résistive.

Préférentiellement, pour augmenter la durée de vie du dispositif, on a ajouté un capteur capacitif mettant en oeuvre les mêmes éléments que la dalle résistive décrite ci-dessus. La dalle résistive étant métallisée, on branche l'une des ses bornes à une borne de détection du circuit intégré QT1103 (Fabriquant QUANTUM, marque déposée). Le capteur capacitif repose sur la génération d'un courant alternatif qui passe, par effet capacitif, au travers de l'utilisateur et de la "terre". Le principe est de mesurer le courant qui s'établit entre l'électrode (liaison directe électrique), l'utilisateur (liaison capacitive), le sol (liaison capacitive), et le retour vers le circuit (liaison capacitive ou connexion directe à la terre).

## Revendications

1. - Dispositif d'assistance (100), **caractérisé en ce qu'**il comporte, dans un boîtier (170) portable adapté à être utilisé avec une seule main :
- au moins deux écrans (105, 110) adaptés à afficher des images représentatives de messages,
- un moyen de sélection (115, 120) d'au moins un message affiché sur l'un desdits écrans
- un moyen d'émission (125) de signaux sonores et
- un moyen de commande (190) adapté à commander l'émission, par ledit moyen d'émission, de signaux sonores représentatifs de chaque message sélectionné avec ledit moyen de sélection.

2. - Dispositif selon la revendication 1, **caractérisé en ce qu'**au moins un des dits écrans (105, 110) est un écran tactile qui comporte à la fois un capteur capacitif et un capteur résistif.

3. - Dispositif selon l'une quelconque des revendications 1 ou 2, **caractérisé en ce qu'**au moins un des dits écrans (105, 110) est un écran tactile qui comporte un capteur capacitif comportant une boucle conductrice (130) placée sous l'écran.

4. - Dispositif selon la revendication 3, **caractérisé en ce que** ladite boucle (130) est entourée de et/ou superposée à un plan de masse.

5. - Dispositif selon l'une quelconque des revendications 1 à 4, **caractérisé en ce que** le moyen de sélection (115, 120) et le moyen de commande (190) sont adaptés à commander un défilement d'images sur lesdits écrans (105, 110), la même image apparaissant successivement sur au moins deux écrans.

6. - Dispositif selon l'une quelconque des revendications 1 à 5, **caractérisé en ce que** le moyen de sélection (115, 120) est disposé entre deux des dits écrans (105, 110).

7. - Dispositif selon l'une quelconque des revendications 1 à 6, **caractérisé en ce que** le moyen de sélection (115, 120) et le moyen de commande (190) sont adaptés à faire, d'abord, défiler des catégories de message, puis, à partir de la sélection d'une catégorie de message, à faire défiler des messages de la catégorie sélectionnée.

8. - Dispositif selon l'une quelconque des revendications 1 à 7, **caractérisé en ce que** le moyen de sélection (115, 120) et le moyen de commande (190) sont adaptés à faire défiler des catégories de message sur l'un des dits écrans (105, 110) et, à partir de la sélection d'une catégorie de message, à faire défiler des messages de la catégorie sélectionnée sur l'autre desdits écrans.

9. - Dispositif selon l'une quelconque des revendications 1 à 8, **caractérisé en ce que** le moyen de sélection (115, 120) est adapté à sélectionner, d'abord, un premier message, le premier message étant mémorisé par le moyen de commande (190), puis un second message, le moyen de commande étant adapté à commander l'émission consécutive des premier et deuxième message, par le moyen d'émission (125) de signaux sonores.

10. - Dispositif selon l'une quelconque des revendications 1 à 9, **caractérisé en ce qu'**il comporte une caisse de résonance interne dont une paroi est formée par le moyen d'émission (125) de signaux sonores.

11. - Dispositif selon la revendication 10, **caractérisé en ce que** ladite caisse de résonance comporte des carénages (165) de composants (160) adaptés à éviter, sauf en son extrémité opposée au moyen d'émission (125) de signaux sonores, les surfaces perpendiculaires à un axe de déplacement du moyen d'émission de signaux sonores.

12. - Dispositif selon l'une quelconque des revendications 1 à 11, **caractérisé en ce qu'**il comporte, en coupe latérale passant par ses points d'appui en position stable, une forme ronde, et un centre de gravité positionné en dessous du centre de courbure de ladite forme ronde.

13. - Dispositif selon l'une quelconque des revendications 1 à 12, **caractérisé en ce qu'**il comporte un connecteur (145) adapté à le relier à un ordinateur, le moyen de commande (190) étant adapté à recevoir et à mémoriser des images associées à des messages, par l'intermédiaire dudit connecteur.
